Europäisches Patentamt

European Patent Office

Office européen des brevets

(19)

(11) EP 1 460 671 A1

(12) **EUROPEAN PATENT APPLICATION**
published in accordance with Art. 158(3) EPC

(43) Date of publication:
22.09.2004 Bulletin 2004/39

(21) Application number: 02795429.6

(22) Date of filing: 25.12.2002

(51) Int Cl.7: **H01J 11/02**, H01J 9/02

(86) International application number:
**PCT/JP2002/013525**

(87) International publication number:
**WO 2003/056599 (10.07.2003 Gazette 2003/28)**

(84) Designated Contracting States:
**AT BE BG CH CY CZ DE DK EE ES FI FR GB GR
IE IT LI LU MC NL PT SE SI SK TR**

(30) Priority: 27.12.2001 JP 2001396312
24.07.2002 JP 2002214952

(71) Applicant: **TEIJIN LIMITED**
**Osaka-shi Osaka 541-0054 (JP)**

(72) Inventors:
• **Kuchida, Takashi, c/o Teijin Ltd.**
**Hino-shi, Tokyo 191-0065 (JP)**
• **Hara, Hiroshi, c/o Teijin Ltd.**
**Hino-shi, Tokyo 191-0065 (JP)**

(74) Representative: **Cockerton, Bruce Roger et al**
**Carpmaels & Ransford,**
**43-45 Bloomsbury Square**
**London WC1A 2RA (GB)**

(54) **SHEET MATERIAL FOR FORMING DIELECTRIC LAYER FOR PLASMA DISPLAY PANEL**

(57) The present invention relates to a sheet material for forming a dielectric for a plasma display panel capable of forming a dielectric layer having a high withstand voltage, a smooth surface, and excellent transparency, and a process for producing same. Furthermore, the present invention also relates to a process for producing a dielectric layer constituting a plasma display panel. The sheet material for forming a dielectric for a plasma display panel of the present invention is a freestanding porous sheet material formed from an inorganic dielectric powder and a thermoplastic resin and having a thickness of 350 µm or less, and contains, as percentages by weight based on the total amount of the dielectric powder and the thermoplastic resin, the dielectric powder at 40% to 98% and the thermoplastic resin at 2% to 60%. Moreover, the process for producing a dielectric layer of the present invention employs thermo-compression-bonding a sheet material for forming a dielectric for a plasma display panel at 80°C to 180°C to one surface of a glass substrate having electrodes fixed thereto, debindering at high temperature, and then sintering or fusing to form the dielectric layer.

*FIG.1*

**Description**

Technical Field

The present invention relates to a sheet material for forming a dielectric for a plasma display panel and, more particularly, it relates to a sheet material for forming a dielectric for a plasma display panel, employing a freestanding porous sheet formed from a dielectric powder and a thermoplastic resin.

The present invention also relates to a process for producing the sheet material for forming a dielectric for a plasma display panel.

The present invention also relates to a process for producing a dielectric layer constituting a plasma display panel, the process using the sheet material for forming a dielectric.

Background Art

In recent years, expectations have been rising for high quality large screen televisions, including Hi- Vision (high-definition television), and in the fields of various types of displays such as CRTs, liquid crystal displays (hereinafter called LCDs), and plasma display panels (hereinafter called PDPs), development of displays suitable for such televisions is progressing.

For the reasons that the process for producing a PDP is easy despite its large-sized panel, the PDP has a wide viewing angle, and the PDP is of a self-luminous type and offers a high quality display, PDPs are considered to be important in flat panel display technology and, in particular, color PDPs are expected to become dominant as the display device for wall-mounted televisions of 20 inches or larger in the future.

In an AC type PDP, transparent electrodes are usually formed from tin-indium oxide, tin oxide, etc. on one surface (surface facing a rear substrate) of a front glass substrate, and metal bus electrodes are provided thereon so as to have a width narrower than that of the transparent electrodes in order to supplement the conductivity of the transparent electrodes. These display electrodes are covered with a transparent dielectric glass layer, and a protective layer of, for example, magnesium oxide is further provided thereon.

Provided on the rear glass substrate are address electrodes, which are covered with a dielectric (glass) layer and further with barrier ribs and a phosphor layer. A discharge gas is sealed in a space between the barrier ribs to form a discharge space.

Under circumstances in which there is a high demand for higher quality displays, there is a desire for the PDPs to have a fine cell structure. When the cell structure becomes fine, not only does the distance between the discharge electrodes become shorter, but also the discharge space becomes smaller. If an attempt is made to ensure that the capacitance of the dielectric layer as a capacitor is the same as is conventional, it is necessary to make the thickness of the dielectric layer thinner than is conventional.

Conventionally, a dielectric layer of this type is formed by a screen printing method or a green sheet method (JP-A-9-102273, JP-A-11-106237, JP-A-10-291834, etc.; JP-A denotes a Japanese unexamined patent application publication.)

However, in these methods, when the printing characteristics during printing and the strength of the green sheet are taken in to consideration, the maximum proportion of a dielectric powder that can be contained is only on the order of 80%. It is also necessary to add a large amount of a solvent/plasticizer as a plasticizing component to the composition, and this might cause bubbles, etc. in the dielectric layer. These factors result in a decrease in the withstand voltage. It is therefore very difficult to make the dielectric layer thinner.

Furthermore, the current printing method and green sheet method cannot make flat an uneven surface of a metal electrode formed on the glass substrate, thus causing a 'pillowing' phenomenon in which the unevenness along the metal electrode remains on the dielectric surface. This might cause nonuniformity in the applied voltage.

Moreover, there is the problem that a large number of micro bubbles remain in the dielectric layer, and sufficient transparency as a PDP front plate cannot be obtained. The green sheet currently used is not freestanding and is supplied in a form in which it is sandwiched between a base film and a cover film. It is therefore necessary to remove these films when it is used, and this is undesirable in terms of waste disposal. Furthermore, the green sheet is a non-freestanding sheet that is in itself tacky, and is difficult to handle.

Disclosure of Invention

A main object of the present invention is to provide a novel sheet material for forming a dielectric for a plasma display panel.

Another object of the present invention is to provide a process for producing a sheet material for forming a dielectric for a plasma display panel capable of forming a dielectric layer having a high withstand voltage, a smooth surface, and excellent transparency.

Yet another object of the present invention is to provide a process for producing a dielectric layer constituting a plasma display panel and, in particular, a process for producing a dielectric layer that is free from defects such as tearing and has excellent transparency.

As a result of an intensive investigation by the present inventors, it has been found that the above-mentioned objects can be achieved by using a freestanding porous sheet in which a dielectric powder is dispersed, and the present invention has thus been accomplished.

That is, in accordance with one aspect of the present invention the following solution means is provided.

1. A sheet material for forming a dielectric for a plasma display panel, the sheet material being a freestanding porous sheet material comprising an inorganic dielectric powder and a thermoplastic resin and having a thickness of 350 µm or less, wherein, as percentages by weight based on the total amount of the dielectric powder and the thermoplastic resin, the dielectric powder is contained at 40% to 98% and the thermoplastic resin is contained at 2% to 60%.

Preferred embodiments of the above-mentioned present invention are listed below.

2. The above-mentioned sheet material for forming a dielectric for a plasma display panel wherein the thermoplastic resin is essentially a polyolefin resin.

3. The above-mentioned sheet material for forming a dielectric for a plasma display panel wherein the thermoplastic resin consists essentially of a polyethylene having an intrinsic viscosity of at least 5 dl/g.

4. The above-mentioned sheet material for forming a dielectric for a plasma display panel wherein the porosity is 40% to 95%.

5. The above-mentioned sheet material for forming a dielectric for a plasma display panel wherein the inorganic dielectric powder is a $PbO-B_2O_3-SiO_2-CaO-Al_2O_3$ glass or a $Bi_2O_3-ZnO-B_2O_3-SiO_2-CaO$ glass.

6. The above-mentioned sheet material for forming a dielectric for a plasma display panel wherein the average particle size of the inorganic dielectric powder is 0.1 to 10 µm.

7. The above-mentioned sheet material for forming a dielectric for a plasma display panel wherein the dielectric powder further comprises titanium oxide.

Another aspect of the present invention provides the following solution means.

8. A process for producing a sheet material for forming a dielectric for a plasma display panel, the sheet material being a freestanding porous sheet material comprising an inorganic dielectric powder and a thermoplastic resin and having a thickness of 350 µm or less, the dielectric powder being contained at 40% to 98% and the thermoplastic resin being contained at 2% to 60% as percentages by weight based on the total amount of the dielectric powder and the thermoplastic resin, wherein the process comprises the steps of gelation using a thermally reversible sol-gel solution consisting essentially of a solvent, the dielectric powder and the thermoplastic resin to form a film, and drawing the film into a sheet form.

Yet another aspect of the present invention provides the following solution means.

9. A process for producing a dielectric layer constituting a plasma display panel, the process comprising the steps of thermocompression-bonding at 80°C to 180°C the above-mentioned sheet material for forming a dielectric for a plasma display panel to one surface of a glass substrate having electrodes fixed thereto, debindering at high temperature, and then sintering or fusing to form the dielectric layer.

Preferred embodiments of the above-mentioned present invention are listed below.

10. The above-mentioned process for producing a dielectric layer constituting a plasma display panel, wherein the sheet material for forming a dielectric for a plasma display panel is thermocompression-bonded to a surface on the electrode side of the glass substrate at a temperature of at least 120°C and at most 180°C and a pressure of 0.5 MPa to 80 MPa, and after debindering at high temperature the dielectric powder is then sintered or fused to form the dielectric layer.

11. The above-mentioned process for producing a dielectric layer constituting a plasma display panel, wherein the porosity of the thermoplastic resin after thermocompression-bonding is 0% to 30%.

Brief Description of Drawings

FIG. 1 is a schematic diagram showing one embodiment of a PDP in which the sheet material of the present invention is used as a plasma display panel dielectric layer.
FIG. 2 is a photograph of a dielectric layer obtained in Example 8.

Preferred Modes for Carrying Out the Invention

The present invention is explained in detail below.

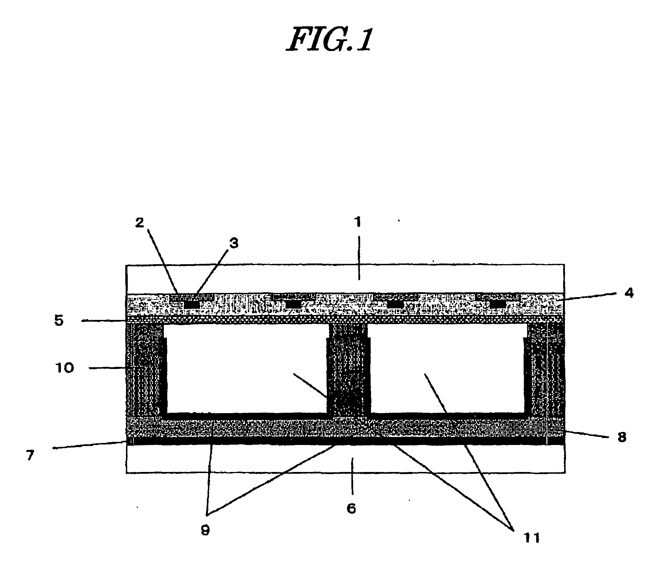

FIG. 1 shows a schematic diagram of an AC type PDP as one example of the present invention. In general, a PDP is formed by bonding a front panel to a rear panel and sealing a discharge gas within discharge spaces (11) formed between the front panel and the rear panel. The front panel is formed from, on top of a front glass substrate (1): transparent electrodes (2), bus electrodes (3) made of silver, etc., a front plate dielectric layer (4), and a protecting layer (5). The rear panel is formed from, on the surface of a rear glass substrate (6): address electrodes (7), a rear plate dielectric layer (8), barrier ribs (10), and R, G, and B phosphors (9).

The sheet material for forming a dielectric for a plasma display panel of the present invention is used in the front plate dielectric layer of the front panel and the rear plate dielectric layer of the rear panel. In terms of optical properties, transmittance and reflectivity are important for the front plate dielectric layer and the rear plate dielectric layer respectively, but other required characteristics such as flatness, high withstand voltage, and thin film formation are basically the same for both.

The sheet material for forming a dielectric for a plasma display panel (hereinafter, mainly called a sheet material or a porous sheet) of the present invention is a sheet-shaped material for forming a PDP dielectric layer, and is a freestanding porous sheet containing, as percentages by weight, 40% to 98% of an inorganic dielectric powder and 2% to 60% of a thermoplastic resin.

The sheet material of the present invention essentially consists of an inorganic dielectric powder and a thermoplastic resin. A process for producing the sheet material currently employed here is now explained. For example, in a printing method and a green sheet method it is very difficult for a printing paste or a green sheet to contain on the order of 85% or more of a dielectric powder when taking into consideration the printing properties during printing and the strength of the green sheet. It is also necessary to add a large amount of a solvent/plasticizer to a material composition as a plasticizing component, and this might cause bubbles, etc. in the dielectric layer. These factors result in a reduction in the withstand voltage.

On the other hand, since the sheet of the present invention can contain a maximum of 98% of the dielectric powder, it can form a high density dielectric layer having few pin holes, thus greatly improving the withstand voltage. As a result, the dielectric layer can be made thinner and this is advantageous in achieving higher definition for the PDP.

The content of the inorganic dielectric powder is 40% to 98% as a percentage by weight based on the total amount of the dielectric powder and the thermoplastic resin, preferably 75% to 98%, and more preferably 85% to 98%. If the content of the inorganic component is more than 98%, then the mechanical strength might be degraded. Conversely, if the content of the inorganic component is low, since the density of the inorganic component is low, the density of the inorganic layer after sintering or fusing decreases, thus degrading the withstand voltage, etc.

The sheet material of the present invention basically contains, excepting the inorganic dielectric component and the thermoplastic resin as a binder for the inorganic dielectric component, no solvent or plasticizer component. There is therefore little concern about the formation of bubbles, etc. due to vaporization of a solvent during debindering.

The sheet material of the present invention is a freestanding porous sheet. The green sheet currently used is basically not freestanding and is therefore supplied in a form in which it is sandwiched between a base film and a cover film. As a result, when the green sheet is used, it is necessary to remove these films, and this is undesirable in terms of waste disposal. Furthermore, the green sheet is a non freestanding sheet that is in itself tacky, and is difficult to handle.

On the other hand, the sheet material of the present invention is freestanding, it is unnecessary to use a base film, which would have to be disposed of later, and the sheet material has good tensile strength and excellent ease of handling.

The thermoplastic resin component of the sheet of the present invention is preferably essentially a polyolefin resin. The 'essentially' referred to here means that the polyolefin resin may contain a small amount of a modifying component such as a stabilizer or a plasticizer without any problems. Examples of the polyolefin resin include a polyethylene resin and a polypropylene resin. Furthermore, the thermoplastic resin can essentially be a polyethylene resin having an intrinsic viscosity of at least 5 dl/g (measured in decalin at 135°C). It the intrinsic viscosity is less than 5 dl/g, then the strength of the sheet is insufficient, and the freestanding properties, etc. might be lost. Examples of the polyethylene resin satisfying the above-mentioned conditions include an ultra high molecular weight polyethylene (UHMWPE) and a high density polyethylene (HDPE). It is also possible to use a blend of these materials or a blend of these high molecular weight polymers with a low molecular weight polymer as long as the intrinsic viscosity of the blend is 5 dl/g or higher.

The thickness of the sheet for forming a dielectric for a plasma display panel of the present invention is 350 µm or less. In the case of a porous sheet as in the present invention, the thickness varies greatly depending on the measurement method. The thickness of the present invention is a thickness measured in a non-contact state by observation using an optical microscope, a laser microscope, SEM, etc. If it is thicker than 350 µm, it goes against the recent trend for higher definition PDPs. The thickness of the sheet material is preferably at least 0.1 μm and at most 350 μm, more preferably at least 10 μm and at most 250 μm, and most preferably at least 40 μm and at most 250 μm. If it is thinner than 0.1 μm, the inorganic dielectric body might not be preserved. When making a PDP dielectric layer using the porous sheet of the present invention, it includes a step of essentially crushing pores of the porous sheet by a hot press. The dielectric layer that is actually formed is therefore much thinner than the apparent thickness of the porous sheet, and it is thus easy to achieve a thinner layer. During this process, since the pores absorb the unevenness of the electrodes, the surface can be flattened. These aspects are very different from those obtained by the conventional green sheet method or printing method.

The sheet material of the present invention is porous as described above. The printing method and the green sheet method currently carried out cannot flatten the unevenness of metal electrodes formed on a glass substrate, and it is therefore difficult to avoid the surface of the dielectric layer becoming uneven. However, if the sheet material of the present invention is used, when the sheet material is thermocompression-bonded to a glass substrate, since the porous sheet absorbs the unevenness of the electrodes, the surface of the dielectric layer after sintering or fusing is flat. With regard to the porosity of the freestanding porous sheet forming the sheet material of the present invention, the porosity is desirably 40% to 95%. The porosity referred to here can be defined by the equation below.

$$\text{Porosity} = (\rho 0 - \rho) / \rho 0 \times 100 \ (\%)$$

In the equation, $\rho 0$ is the theoretical density when there are no pores, and $\rho$ is the experimental density of the porous sheet having pores.

Examples of the inorganic dielectric powder used in the sheet material for forming a dielectric for a plasma display panel of the present invention include a glass such as a $PbO-B_2O_3-SiO_2-CaO-Al_2O_3$ glass or a $Bi_2O_3-ZnO-B_2O_3-SiO_2-CaO$ glass. The average particle size of the inorganic dielectric powder is usually preferably 0.1 to 10 μm. The average particle size referred to in the present invention means the number average particle size. If it is larger than 10 μm, then large voids remain after sintering or fusing, and the withstand voltage undesirably decreases. Conversely, if it is less than 0.1 μm, then the inorganic dielectric powder rapidly melts and flows during sintering or fusing and might react with an electrode to generate bubbles. It is more preferably 0.2 to 5 μm.

When the above-mentioned inorganic dielectric powder is used as a dielectric glass, a transparent dielectric is formed and this is the most suitable as a PDP front plate dielectric, which is required to have good transmittance. On the other hand, in the case of the rear plate dielectric layer, which is required to have good reflectivity, it is preferable for titanium oxide to be contained in addition to the above-mentioned inorganic dielectric powder. The content of titanium oxide may be on the order of a content that can give sufficient reflectivity as the rear plate. The reflectivity of the rear plate is preferably 80% or more, and more preferably 90% or more.

The sheet material for forming a dielectric for a plasma display panel of the present invention is produced by drawing a gelled sheet obtained by gelation, to form a film, a thermally reversible sol-gel solution consisting essentially of a solvent, a dielectric powder, and a thermoplastic resin. That is, after the inorganic dielectric powder is dispersed in part of an appropriate gelling solvent using a milling machine, a thermoplastic resin as a binder and the remainder of the gelling solvent are added thereto, and the thermoplastic resin and the solvent are heated and melted so as to form a sol. During this stage, in order to disperse the inorganic dielectric powder uniformly, it is preferable to add an appropriate dispersing agent. The solated composition is shaped into a sheet form at a gelling temperature or higher, and this sheet is rapidly cooled to a gelling point or less to form a gelled sheet. This gelled sheet is drawn uniaxially or biaxially at a temperature of at least the glass transition temperature of the thermoplastic resin, and then thermally fixed. If necessary, after this step, a step of extracting the gelling solvent may be carried out.

Examples of the gelling solvent include hexane, decalin, and paraffin when the thermoplastic resin is polyethylene. It is also possible to use a mixture of these solvents.

In this way, the sheet material for forming a dielectric for a plasma display panel used in the present invention has excellent properties. However, since this sheet material is a porous drawn film unlike the green sheet of the conventional method, it is necessary for the production process to employ steps of crushing pores and relaxing orientation. If the pores are not crushed sufficiently, then the distance between dielectric powder particles is large and it is difficult to form a dense dielectric layer during sintering or fusing. If the relaxation of orientation is insufficient, thermal shrinkage during heating might cause tearing or a decrease in the film thickness of the sheet material, thereby making it impossible to form a uniform dielectric layer.

In accordance with the present invention, the plasma display panel dielectric layer can be formed by, for example, thermocompression-bonding the sheet material for forming a dielectric for a plasma display panel of the present invention at 80°C to 180°C to one surface of a glass substrate having electrodes formed thereon, debindering at high temperature, and then sintering or fusing. Since the above-mentioned sheet material of the present invention is thermocompression-bonded on the glass substrate, porous portions thereof are essentially crushed, unevenness of the electrodes is flattened, and the dielectric powder can be packed more densely.

In the present invention, the sheet material is preferably thermocompression-bonded to a glass substrate having electrodes fixed thereto at a temperature of at least 120°C and at most 180°C and a pressure of at least 0.5 MPa, thereby crushing the pores and at the same time relaxing the orientation.

If the compression-bonding temperature is lower than 80°C, then the bonding power to the glass substrate is weak, the pores cannot be crushed sufficiently, and the relaxation of orientation is inadequate. On the other hand, if it is higher than 180°C, then the sheet undesirably melts completely. The compression-bonding temperature is preferably at least 120°C and at most 180°C, and more preferably at least 140°C and at most 160°C.

The compression-bonding pressure of the production process of the present invention is at least 0.5 MPa. If it is less than 0.5 MPa, the pores might not be crushed sufficiently. It is preferably at least 10 MPa. There is no particular upper limit to the pressure, and compression-bonding is carried out to an extent such that the glass substrate is not broken.

The compression-bonding time of the present invention is at least 10 sec. If the compression-bonding time is less than 10 sec, then the relaxation of orientation is inadequate, thereby causing a possibility of tearing in the sheet when heating. It is preferably at least 30 sec. There is no particular upper limit thereto as long as the orientation is sufficiently relaxed.

In the process for forming the PDP dielectric layer of the present invention, the porosity after thermocompression-bonding the thermoplastic resin is 0% to 30%. If the porosity after thermocompression-bonding is more than 30%, then since the distance between dielectric powder particles is large, sintering or fusing by heating is inadequate, and the resulting dielectric layer might contain a large number of bubbles. In this case, both the optical properties and the withstand voltage are inadequate.

In the process for forming the dielectric layer of the present invention, the porosity of the dielectric layer after thermocompression-bonding of the thermoplastic resin is preferably at most 30%, more preferably at most 20%, and most preferably at most 10%.

The process for producing the dielectric layer constituting a plasma display panel of the present invention comprises thermocompression-bonding the sheet material for forming a dielectric for a plasma display panel, the sheet material being a freestanding porous sheet, at a temperature of 80°C to 180°C to one surface of a glass substrate having electrodes fixed thereto, debindering at high temperature, and then sintering or fusing the dielectric powder.

Debindering is a process for removing an organic component such as a thermoplastic resin, and excepting the dielectric powder, from the sheet material for forming a dielectric for a plasma display panel. The organic component can be removed by a known method such as, for example, a method involving heating in an electric furnace at high temperature. The debindering temperature depends on the conditions, but is usually 250°C to 450°C.

The debindered dielectric powder is sintered or fused on the glass substrate to form the dielectric layer. The sintering or fusing temperature is preferably on the order of 400°C to 650°C.

In accordance with the present invention, by using the freestanding porous sheet containing 40% to 98% of the inorganic dielectric powder and 2% to 60% of the thermoplastic resin, the dielectric layer of the PDP glass substrate can be packed with high density and good flatness. As a result, the dielectric layer can be made thinner and given a higher withstand voltage.

Furthermore, by thermally relaxing the sheet material sufficiently and crushing the pores, a dielectric layer free of defects such as tearing and having excellent transparency can be formed.

Examples

The present invention is now explained in detail by reference to examples, but the present invention is not limited by these examples. The sheet material was measured by the following methods.

The thickness of a drawn sheet was measured by a scanning electron microscope or a laser microscope.

The density of a sheet was determined by measuring the weight of a piece of sheet with a known volume.

The porosity was determined using the following equation from the measured density $\rho$ and the theoretical density $\rho 0$ of an inorganic compound-containing sheet having no pores.

$$\text{Porosity} = (\rho 0 - \rho) / \rho 0 \times 100 \ (\%)$$

The tensile strength was measured according to ASTM standard D882 using an entire cross section of a sample as a base.

[Example 1]

To 56 parts by weight of decalin were added 34 parts by weight of a paraffin oil (registered trade name: Ondina Oil 68, manufactured by Shell) and 10 parts by weight of an ultra high molecular weight polyethylene (Hi-Zex Million 240M, manufactured by Mitsui Chemical Co., Ltd.) having a limiting viscosity number of 15 dl/g (measured in decalin at 135°C), and dispersed therein was 90 parts by weight of a PbO-$B_2O_3$-$SiO_2$-CaO-$Al_2O_3$ glass having an average particle size of 2.2 µm. This dispersion was dissolved at 180°C using a twin screw kneader-extruder to form a sol, which was then extruded at 150°C using a flat film extruder die. This extruded product was passed through a water bath to cool it and form a gel. The sheet thus molded was dried at 80°C for 1 hour to remove decalin. The thickness of this sheet was 700 µm.

This paraffin oil-containing sheet, in which paraffin remained in the sheet, was biaxially drawn with draw ratios of 3 times in the MD direction and 14 times in the TD direction at a drawing temperature of 110°C to 125°C, and then subjected to a thermal fixation treatment (heat set) at 140°C for 1 minute. After drawing the sheet, the paraffin oil was extracted from the sheet using hexane, and the sheet was dried at 80°C for 1 hour. The sheet thus obtained was porous and had the properties described in Table 1.

The porous sheet thus obtained was freeze-sliced using liquid nitrogen and the thickness thereof as a sheet cross section was measured using a 1LM21D real-time scanning laser microscope manufactured by Lasertech Corporation.

The density ρ was calculated from its weight, the thickness obtained by the method above, and its area. The theoretical density ρ0 was ρ = 3.30 g/cm$^3$.

The sheet thus formed was thermocompression-bonded to a glass substrate having a thickness of 2 mm at 155°C and a pressure of 10 MPa for 3 minutes, heated to 600°C at a rate of temperature increase of 3°C/minute, held at 600°C for 10 minutes, and then cooled. The properties of the dielectric layer thus obtained are shown in Table 1.

[Example 2]

The procedure of Example 1 was repeated to prepare a sheet except that the paraffin-remaining sheet of Example 1 was drawn with draw ratios of 3 times in the MD direction and 7 times in the TD direction at 110°C to 125°C. The properties of the sheet thus obtained are shown in Table 1.

[Example 3]

To 27 parts by weight of decalin were added 16 parts by weight of a paraffin oil (Ondina Oil 68, manufactured by Shell) and 5 parts by weight of an ultra high molecular weight polyethylene (Hi-Zex Million 240M, manufactured by Mitsui Chemical Co., Ltd.) having a limiting viscosity of 15 dl/g (measured in decalin at 135°C), and dispersed therein was 51 parts by weight of a PbO-$B_2O_3$-$SiO_2$-CaO-$Al_2O_3$ glass having a number average particle size of 2.2 µm and D90 = 4 µm. This dispersion was dissolved at 180°C using a twin screw kneader-extruder to form a sol, which was then extruded at 150°C using a flat film extruder die. This extruded product was passed through a water bath to cool it and form a gel. The sheet thus molded was dried at 80°C for 1 hour to remove decalin. The thickness of this sheet was 700 µm.

This paraffin oil-containing sheet, in which paraffin remained in the sheet, was biaxially drawn with draw ratios of 2.1 times in the MD direction and 3.2 times in the TD direction at a drawing temperature of 115°C, and then subjected to a thermal fixation treatment (heat set) at 140°C for 1 minute. After drawing the sheet, the paraffin oil was extracted from the sheet using hexane, and the sheet was dried at 80°C for 1 hour and further subjected to a thermal fixation treatment (heat set) at 140°C for 1 minute. The sheet thus obtained was porous and had properties described in Table 1.

[Example 4]

To 27 parts by weight of decalin were added 16 parts by weight of a paraffin oil (Ondina Oil 68, manufactured by Shell) and 5 parts by weight of an ultra high molecular weight polyethylene (Hi-Zex Million 240M, manufactured by Mitsui Chemical Co., Ltd.) having a limiting viscosity of 15 dl/g (measured in decalin at 135°C), and dispersed therein was 51 parts by weight of a PbO-$B_2O_3$-$SiO_2$-CaO-$Al_2O_3$ glass having a number average particle size of 2.2 µm and D90 = 4 µm. This dispersion was dissolved at 180°C using a twin screw kneader-extruder to form a sol, which was then extruded at 150°C using a flat film extruder die. This extruded product was passed through a water bath to cool it and form a gel. The sheet thus molded was dried at 80°C for 1 hour to remove decalin. The thickness of this sheet was 1.4 mm.

A sheet was prepared in the same manner as in Example 1 except that this paraffin-remaining sheet was biaxially drawn with draw ratios of 3 times in the MD direction and 4.8 times in the TD direction at 115°C. The sheet thus obtained was porous and had the properties described in Table 1.

[Example 5]

The procedure of Example 2 was repeated to prepare a sheet except that the paraffin-remaining sheet of Example 2 was drawn with draw ratios of 3 times in the MD direction and 6.4 times in the TD direction at 115°C. The sheet thus obtained was porous and had the properties described in Table 1.

[Comparative Example 1]

In accordance with JP-A-11-106237, 75 parts by weight of a $PbO$-$B_2O_3$-$SiO_2$-$CaO$-$Al_2O_3$ glass, 21 parts by weight of a poly(butyl methacrylate), 4 parts by weight of dioctyl phthalate as a plasticizer, and 30 parts by weight of toluene were well kneaded at room temperature, this mixture was then cast on a PET film using a doctor blade to give a film, and it was dried in a dryer to remove toluene and give a green sheet. This sheet was very fragile and was not freestanding, and a tensile strength measurement could not be carried out.

TABLE 1

|  | Example | | | | | Comp. Ex. |
|---|---|---|---|---|---|---|
|  | 1 | 2 | 3 | 4 | 5 | 1 |
| Thickness (μm) | 50 | 80 | 180 | 210 | 200 | 40 |
| Porosity (%) | 78.7 | 78.3 | 63 | 68 | 68 | 0 |
| Inorganic component content (%) | 88 | 88 | 88 | 88 | 88 | 75 |
| Tensile strength<br>    MD direction (MPa)<br>    TD direction (MPa) | 10<br>27 | 11<br>21 | 9<br>14 | 12<br>18 | 13<br>21 | Could not<br>measure |
| Dielectric layer thickness (μm) | 6 | 10 | 40 | 40 | 35 | - |

[Production Example 1]

To 56 parts by weight of decalin were added 34 parts by weight of a paraffin oil (registered trade name: Ondina Oil 68, manufactured by Shell) and 10 parts by weight of an ultra high molecular weight polyethylene (Hi-Zex Million 240M, manufactured by Mitsui Chemical Co., Ltd.) having a limiting viscosity number of 15 dl/g (measured in decalin at 135°C), and dispersed therein was 90 parts by weight of a $PbO$-$B_2O_3$-$SiO_2$-$CaO$-$Al_2O_3$ glass having an average particle size of 2.2 μm. This dispersion was dissolved at 180°C using a twin screw kneader-extruder to form a sol, which was then extruded at 150°C using a flat film extruder die. This extruded product was passed through a water bath to cool it and form a gel. The sheet thus molded was dried at 80°C for 1 hour to remove decalin. The thickness of this sheet was 700 μm.
This paraffin oil-containing sheet, in which paraffin remained in the sheet, was biaxially drawn with draw ratios of 3 times in the MD direction and 7 times in the TD direction at a drawing temperature of 105°C to 125°C, and then subjected to a thermal fixation treatment (heat set) at 140°C for 1 minute. After drawing the sheet, the paraffin oil was extracted from the sheet using hexane, and the sheet was dried at 80°C for 1 hour. The sheet thus drawn and dried had the properties described in Table 2.
The thickness of the porous sheet thus obtained was measured using a 1LM21D real-time scanning laser microscope manufactured by Lasertech Corporation.
The density ρ was calculated from its weight, the thickness obtained by the method above, and its area. The theoretical density ρ0 was ρ0 = 3.30 g/cm$^3$.

[Production Example 2]

The undrawn paraffin oil-containing sheet obtained in Production Example 1 was biaxially drawn with draw ratios of 1.8 times in the MD direction and 3.0 times in the TD direction at a drawing temperature of 105°C to 125°C, and then subjected to a thermal fixation treatment (heat set) at 140°C for 1 minute. After the sheet was drawn, paraffin oil was extracted from the sheet using hexane, and the sheet was dried at 80°C for 1 hour. The sheet thus drawn and dried had the properties described in Table 2.

TABLE 2

|  | Production Example 1 | Production Example 2 |
|---|---|---|
| Sheet thickness (μm) | 80 | 115 |
| Porosity (%) | 79 | 51 |

[Example 6]

Two sheets produced in Production Example 1 were superimposed on top of a glass plate, a Kapton film was placed thereon as a release film, and they were subjected to thermocompression-bonding at 145°C and 51 MPa for 10 minutes. The porosity after compression-bonding is shown in Table 3.
The glass substrate having the sheets thermocompression-bonded thereto was subjected to debindering in an electric furnace to fuse the dielectric powder. The finished dielectric layer had a uniform film thickness of 23 μm.

[Example 7]

The procedure of Example 6 was repeated except that the thermocompression-bonding conditions were 155°C, 10 MPa, and 10 minutes. The porosity after compression-bonding is shown in Table 3.
The glass substrate having the sheets thermocompression-bonded thereto was subjected to debindering in an electric furnace to fuse the dielectric powder. The finished dielectric layer had a uniform film thickness of 23 μm.

[Example 8]

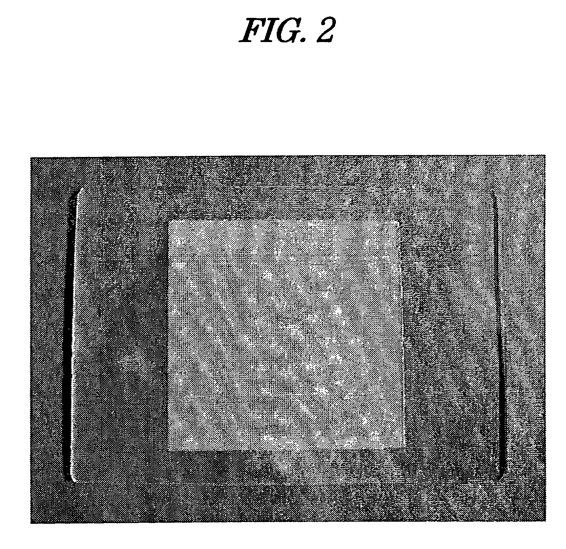

The procedure of Example 6 was repeated except that the thermocompression-bonding conditions were 155°C, 51 MPa, and 10 minutes. The porosity after compression-bonding is shown in Table 3.
The glass substrate having the sheets thermocompression-bonded thereto was subjected to debindering in an electric furnace to fuse the dielectric powder. The finished dielectric layer had a uniform film thickness of 23 μm. A photograph of the dielectric layer thus obtained is shown in FIG. 2.

[Example 9]

The procedure of Example 6 was repeated except that the thermocompression-bonding conditions were 160°C, 51 MPa, and 10 minutes. The porosity after compression-bonding is shown in Table 3.
The glass substrate having the sheets thermocompression-bonded thereto was subjected to debindering in an electric furnace to fuse the dielectric powder. The finished dielectric layer had a uniform film thickness of 23 μm.

[Example 10]

The procedure of Example 6 was repeated except that the porous sheets prepared in Production Example 2 were used and thermocompression-bonding was carried out at 155°C and 51 MPa for 10 minutes to form a dielectric layer. The porosity after compression-bonding is shown in Table 3.
The dielectric layer thus obtained had a uniform film thickness of 34 μm.

TABLE 3

|  | Example | | | | |
|---|---|---|---|---|---|
|  | 6 | 7 | 8 | 9 | 10 |
| Porosity after thermocompression-bonding (%) | 14 | 20 | 13 | 5 | 10 |
| Thickness of dielectric after sintering or fusing (μm) | 23 | 23 | 23 | 23 | 34 |

**Claims**

1. A sheet material for forming a dielectric for a plasma display panel, the sheet material being a freestanding porous sheet material comprising an inorganic dielectric powder and a thermoplastic resin and having a thickness of 350 μm or less, wherein, as percentages by weight based on the total amount of the dielectric powder and the thermoplastic resin, the dielectric powder is contained at 40% to 98% and the thermoplastic resin is contained at 2%

EP 1 460 671 A1

to 60%.

2. The sheet material for forming a dielectric for a plasma display panel according to Claim 1 wherein the thermoplastic resin is essentially a polyolefin resin.

3. The sheet material for forming a dielectric for a plasma display panel according to Claim 1 wherein the thermoplastic resin consists essentially of a polyethylene having an intrinsic viscosity of at least 5 dl/g.

4. The sheet material for forming a dielectric for a plasma display panel according to Claim 1 wherein the porosity is 40% to 95%.

5. The sheet material for forming a dielectric for a plasma display panel according to Claim 1 wherein the inorganic dielectric powder is a $PbO-B_2O_3-SiO_2-CaO-Al_2O_3$ glass or a $Bi_2O_3-ZnO-B_2O_3-SiO_2-CaO$ glass.

6. The sheet material for forming a dielectric for a plasma display panel according to Claim 5 wherein the average particle size of the inorganic dielectric powder is 0.1 to 10 μm.

7. The sheet material for forming a dielectric for a plasma display panel according to Claim 5 wherein the dielectric powder further comprises titanium oxide.

8. A process for producing a sheet material for forming a dielectric for a plasma display panel, the sheet material being a freestanding porous sheet material comprising an inorganic dielectric powder and a thermoplastic resin and having a thickness of 350 μm or less, the dielectric powder being contained at 40% to 98% and the thermoplastic resin being contained at 2% to 60% as percentages by weight based on the total amount of the dielectric powder and the thermoplastic resin, wherein the process comprises the steps of gelling using a thermally reversible gelling solution consisting essentially of a solvent, the dielectric powder, and the thermoplastic resin to form a film, and drawing the film into a sheet form.

9. A process for producing a dielectric layer constituting a plasma display panel, the process comprising the steps of thermocompression-bonding at 80°C to 180°C the sheet material for forming a dielectric for a plasma display panel according to Claim 1 to one surface of a glass substrate having electrodes fixed thereto, debindering at high temperature, and then sintering or fusing to form the dielectric layer.

10. The process for producing a dielectric layer constituting a plasma display panel according to Claim 9, wherein the sheet material for forming a dielectric for a plasma display panel is thermocompression-bonded to a surface on the electrode side of the glass substrate at a temperature of at least 120°C and at most 180°C and a pressure of 0.5 MPa to 80 MPa, and after debindering at high temperature the dielectric powder is then sintered or fused to form the dielectric layer.

11. The process for producing a dielectric layer constituting a plasma display panel according to Claim 9 wherein the porosity of the thermoplastic resin after thermocompression-bonding is 0% to 30%.

# FIG.1

# FIG. 2

## INTERNATIONAL SEARCH REPORT

| International application No. |
|---|
| PCT/JP02/13525 |

**A. CLASSIFICATION OF SUBJECT MATTER**
Int.Cl$^7$ H01J11/02, 9/02

According to International Patent Classification (IPC) or to both national classification and IPC

**B. FIELDS SEARCHED**

Minimum documentation searched (classification system followed by classification symbols)
Int.Cl$^7$ H01J11/02, 9/02

Documentation searched other than minimum documentation to the extent that such documents are included in the fields searched

| | | | |
|---|---|---|---|
| Jitsuyo Shinan Koho | 1940–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-60274 A  (Nippon Electric Glass Co., Ltd.),<br>02 March, 1999 (02.03.99),<br>Full text<br>(Family: none) | 1,5,6,9,10<br>2 |
| Y | JP 6-317786 A  (Sony/Tektronix Corp.),<br>15 November, 1994 (15.11.94),<br>Full text; all drawings<br>& EP 615248 A          & TW 233375 A<br>& US 5461395 A         & CN 1098536 A | 2 |
| X | JP 2000-128567 A  (Nippon Electric Glass Co., Ltd.),<br>09 May, 2000 (09.05.00),<br>Full text; all drawings<br>(Family: none) | 1,5,6,7,9,<br>10 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>07 March, 2003 (07.03.03) | Date of mailing of the international search report<br>25 March, 2003 (25.03.03) |
|---|---|
| Name and mailing address of the ISA/<br>Japanese Patent Office | Authorized officer |
| Facsimile No. | Telephone No. |

Form PCT/ISA/210 (second sheet) (July 1998)

**EP 1 460 671 A1**

## INTERNATIONAL SEARCH REPORT

International application No.

PCT/JP02/13525

C (Continuation). DOCUMENTS CONSIDERED TO BE RELEVANT

| Category* | Citation of document, with indication, where appropriate, of the relevant passages | Relevant to claim No. |
|---|---|---|
| X | JP 11-149863 A (Dainippon Printing Co., Ltd.), 02 June, 1999 (02.06.99), Full text; all drawings & KR 99036875 A | 1,5,6,7,9, 10 |
| X | JP 11-11979 A (Nippon Electric Glass Co., Ltd.), 19 January, 1999 (19.01.99), Full text (Family: none) | 1,5,6,9,10 |
| X | JP 11-106237 A (Nippon Electric Glass Co., Ltd.), 20 April, 1999 (20.04.99), Full text & US 6010973 A | 1,5,6,9,10 |
| P,X | JP 2002-160939 A (Nippon Electric Glass Co., Ltd.), 04 June, 2002 (04.06.02), Full text & KR 2002021072 A | 1,5 |
| A | JP 2000-127630 A (Dainippon Printing Co., Ltd.), 09 May, 2000 (09.05.00), Full text; all drawings (Family: none) | 1-11 |
| P,A | JP 2002-289093 A (Matsushita Electric Industrial Co., Ltd.), 04 October, 2002 (04.10.02), Full text; all drawings (Family: none) | 1-11 |

Form PCT/ISA/210 (continuation of second sheet) (July 1998)